# FASCICULE DE BREVET EUROPEEN

(11) **EP 4 329 245 B1**
(45) Date de publication et mention de la délivrance du brevet: **02.04.2025**
(21) Numéro de dépôt: 23189875.0
(22) Date de dépôt: 04.08.2023
(51) Int. Cl.: H04L 9/40, H04L 61/5038, H04L 61/5046, H04L 61/5092, H04W 12/00, H04W 12/02, H04W 12/122, H04W 12/50, H04W 84/12, H04W 80/02

(54) **PROCÉDÉ ET DISPOSITIF DE CONNEXION SÉCURISÉE DANS UN RÉSEAU LOCAL**
VERFAHREN UND VORRICHTUNG ZUR SICHEREN VERBINDUNG IN EINEM LOKALEN NETZWERK
METHOD AND DEVICE FOR SECURE CONNECTION IN LOCAL AREA NETWORK

(30) Priorité: 25.08.2022 FR 2208514
(43) Date de publication de la demande: 28.02.2024
(73) Titulaire: Orange, 92130 Issy-les-Moulineaux (FR)
(72) Inventeur: FONTAINE, Fabrice, 92326 Chatillon (FR); LE GUILLOU, Xavier, 92326 Chatillon (FR)

(56) Documents cités:
- MING ET AL: "Protecting Location Privacy with Dynamic Mac Address Exchanging in Wireless Networks", 30 November 2007 (2007-11-30), XP093031463, Retrieved from the Internet <URL:https://ieeexplore.ieee.org/stampPDF/getPDF.jsp?tp=&arnumber=4410927&ref=aHR0cHM6Ly9zY2hvbGFyLmdvb2dsZS5jb20v> [retrieved on 20230314]
- ARANA O. ET AL: "MSP: Providing location privacy in WLAN networks with a MAC Swapping Protocol", COMPUTER NETWORKS, vol. 138, 1 June 2018 (2018-06-01), AMSTERDAM, NL, pages 136 - 148, XP093031542, ISSN: 1389-1286, DOI: 10.1016/j.comnet.2018.03.030
- DEBI PRASAD MISHRA ET AL: "Designing a Secure Network Interface By Thwarting Mac Spoofing Attacks", INFORMATION AND COMMUNICATION TECHNOLOGY FOR COMPETITIVE STRATEGIES, ACM, 2 PENN PLAZA, SUITE 701 NEW YORK NY 10121-0701 USA, 4 March 2016 (2016-03-04), pages 1 - 6, XP058267459, ISBN: 978-1-4503-3962-9, DOI: 10.1145/2905055.2905161

## Description

### Technique antérieure

L'invention se rapporte au domaine général des télécommunications. Elle concerne plus particulièrement la sécurité d'un terminal d'un réseau local contre une attaque qui permettrait à un terminal non autorisé d'y accéder frauduleusement.

Les technologies radio, notamment Wi-Fi, sont de plus en plus utilisées au sein d'un réseau local, qu'il soit domestique ou d'entreprise. Ces technologies permettent de connecter des smartphones, des caméras, des drones, des capteurs et encore toutes sortes d'objets regroupés sous l'acronyme loT « Internet Of Things ». Bien que ces technologies aient de nombreux avantages, elles comportent aussi des faiblesses liées à la nature même du médium de transmission. Ainsi, n'importe quel individu à portée radio est capable de recevoir les données radio échangées par ces équipements (même si celles-ci sont chiffrées). En particulier, n'importe quel terminal pirate peut utiliser le canal radio de manière malveillante pour détecter les points d'accès Wi-Fi à proximité, obtenir les adresses et la liste des terminaux connectés à chaque point d'accès et finalement envoyer des paquets radio malveillants afin de nuire à un objet, par exemple en le déconnectant de son point d'accès (il peut utiliser à cet effet une attaque bien connue de l'homme du métier, connue sous l'appellation anglo-saxonne de « deauth flood » ) ou en utilisant un type d'attaque qui lui permettrait de déchiffrer les paquets destinés à l'objet (un tel type de vulnérabilité est également bien connue de l'homme du métier sous les acronymes de Krack ou Kr00k).

Il est de surcroît possible, en analysant l'adresse d'un terminal, de déterminer son type. En effet, les premiers caractères de cette adresse, par exemple de type MAC, identifient souvent le fabricant, ou constructeur, du terminal. Ces données peuvent être utilisées pour préparer un vol ou identifier des vulnérabilités particulières de certains terminaux. Par exemple si l'attaquant détecte que le terminal est issu d'un fabricant de caméras, il peut tenter de récupérer les images issues de la caméra, ou de la déconnecter, etc.

On connait une solution pour limiter de telles attaques. Il est connu de rendre aléatoire l'adresse, et notamment l'adresse MAC, d'un terminal, à des fins de protection de la vie privée. Ainsi, aujourd'hui, un téléphone intelligent (smartphone) peut utiliser des adresses différentes en fonction du réseau Wi-Fi auquel il se connecte. Des travaux en cours au sein de l'organisme Wi-Fi Alliance visent à autoriser les terminaux à modifier leur adresse régulièrement. Par exemple, la société Apple^{©} propose pour ses terminaux les plus récents un changement d'adresse MAC toutes les 24 heures.

Cependant, même cette dernière solution présente une faille de sécurité : un terminal malveillant peut intercepter l'adresse d'un objet du réseau, même si la plage temporelle de maintien de l'adresse est limitée.

De surcroît une telle solution implique de modifier le logiciel (*firmware*) des cartes Wi-Fi des terminaux, ce qui est complexe et coûteux.

Il est également connu des documents « Protecting Location Privacy with Dynamic Mac Address Exchanging in Wireless Networks, Ming et AL, 30 novembre 2007 » et « MSP: Providing location privacy in WLAN networks with a MAC Swapping Protocol, COMPUTER NETWORKS, vol. 138, ARANA O. et AL, 1 juin 2018 » de réaliser des échanges dynamiques d'adresses MAC au sein d'un réseau, en particulier mobile. Cependant, un tel échange ne permet notamment plus d'associer l'adresse MAC d'un terminal à son type, ce qui peut être gênant dans certaines applications.

Il existe donc un besoin pour une solution simple permettant d'éviter une faille de sécurité permettant à un terminal malveillant de récupérer l'adresse des terminaux d'un réseau local dans le but de leur nuire.

### Exposé de l'invention

L'invention vise un procédé de connexion sécurisée tel qu'exposé dans la revendication 1.

Avantageusement, une adresse, par exemple MAC, d'un autre terminal est utilisée à la place de l'adresse MAC propre du terminal qui cherche à se connecter au réseau. Ainsi, le risque d'attaque contre ce terminal est fortement réduit, puisque d'une part l'adresse MAC est rendue dynamique (il est possible d'en changer à chaque connexion), d'autre part l'adresse MAC du terminal qui a été empruntée ne correspond pas au type réel du terminal, ce qui induit une confusion pour un attaquant : ainsi un terminal (par exemple une caméra) disposant d'une adresse propre qui permettrait d'identifier ses caractéristiques (constructeur, type, etc.) sera protégé par la connexion au réseau via cette nouvelle adresse empruntée à un autre terminal (par exemple une ampoule connectée) : l'attaquant ne pourra cibler son attaque contre une caméra (par exemple changer l'angle de vue de la caméra, ou s'emparer de données correspondant à des photographies du domicile) puisqu'il croit avoir affaire à une ampoule connectée. Le ciblage devient impossible grâce à ce subterfuge.

Par « point d'accès », on entend ici tout élément de routage apte à créer un réseau local, par exemple Wi-Fi : passerelle, terminal mobile positionné en hotspot, routeur, etc. Dans la suite, cet élément est appelé passerelle et désigne le point d'accès d'un réseau local.

Par « adresse propre », on entend l'adresse du terminal, qui peut correspondre à l'adresse que lui a donnée le constructeur, généralement unique, ou à une adresse choisie par l'utilisateur du réseau.

Par « données d'état », on entend un ensemble de données qui comprennent, pour au moins un terminal du réseau, au moins une adresse, par exemple son adresse MAC, et optionnellement d'autres données comme le type, le constructeur, etc. du terminal.

Par « connexion » à la passerelle, on entend toute méthode à la portée de l'homme du métier, par exemple un appairage (Wi-Fi, Bluetooth, etc.) qui autorise une communication subséquente du terminal connecté sur le réseau. Naturellement, une fois le premier terminal connecté avec l'adresse empruntée, il continue à utiliser cette adresse pour la communication.

Par terminal « connu » du réseau, on entend un terminal qui s'est connecté au moins une fois à la passerelle du réseau local. Il est donc « connu » de la passerelle au moins du réseau, indépendamment de son état courant : il peut être effectivement connecté à la passerelle, ou déconnecté.

Selon un mode de réalisation, l'étape d'obtenir les données d'état comporte les sous-étapes de :
- recevoir un message en provenance dudit ou vers ledit au moins un second terminal du réseau comportant ladite adresse du second terminal ;
- mémoriser ladite adresse dudit au moins un second terminal dans les données d'état ; et le procédé comporte en outre une étape de détecter une inactivité dudit au moins un second terminal avant de se connecter.

Avantageusement selon ce mode, les données d'état sont collectées par le terminal lui-même. Sur réception d'un message en provenance de ou vers un terminal du réseau, il extrait son adresse et la mémorise dans les données d'état. S'il s'agit de l'adresse MAC, celle-ci peut être extraite même si le message est chiffré, car l'adresse MAC n'est habituellement pas chiffrée. Lorsque le terminal dont l'adresse a été mémorisée se déconnecte du réseau, soit implicitement, soit explicitement, le premier terminal détecte son inactivité et peut s'approprier son adresse sans inconvénient pour le terminal dont il a usurpé l'adresse puisque celui-ci n'est plus connecté. Le premier terminal peut ainsi construire une liste des terminaux actifs du réseau, avec leurs adresses, et détecter l'inactivité de l'un d'entre eux.

Par « inactivité », on entend que le terminal ne communique plus sur le réseau. Cette inactivité peut être détectée par une absence de communication pendant un certain temps, ou par une déconnexion explicite du terminal, ou d'un ordre de déconnexion en provenance du point d'accès, etc.

Selon une variante de réalisation, les données d'état comportent en outre la date de réception du message en provenance dudit ou vers ledit au moins un second terminal, et l'inactivité dudit au moins un second terminal est détectée en fonction de ladite date de réception.

Avantageusement selon ce mode, la date de réception d'un message par le premier terminal, par exemple le dernier qui a été reçu en provenance du second terminal, permet d'armer une temporisation à l'issue de laquelle, en l'absence de message reçu, on peut décider que le second terminal est inactif (par exemple, au bout de trente minutes).

Selon un mode de réalisation, l'étape d'obtenir les données d'état comporte une étape de recevoir un message comprenant les données d'état en provenance d'un troisième terminal du réseau.

Avantageusement selon ce mode, les données d'état sont collectées par un troisième terminal, différent du premier terminal qui prépare sa connexion. En particulier, le point d'accès, ou passerelle, peut être utilisé à cette fin. Ainsi le premier terminal n'a plus à se soucier de savoir si le second terminal dont il souhaite emprunter l'adresse est connecté ou non, cette gestion étant laissée par exemple à la passerelle du réseau qui a une connaissance de tous les terminaux du réseau à un instant donné et de leur état de connexion.

Selon un mode de réalisation, les données d'état comportent en outre une priorité associée à ladite adresse dudit au moins un second terminal.

Avantageusement selon ce mode, une priorité étant associée aux différents terminaux, il est plus simple et plus efficace pour le premier terminal de choisir l'adresse de priorité la plus élevée, c'est-à-dire celle qui optimise ses chances de protection. Par exemple pour une caméra, il est plus avantageux de substituer à son adresse celle d'une ampoule connectée, plutôt que celle d'une autre caméra. Dans ce cas la priorité de l'ampoule connectée sera avantageusement plus élevée.

Selon un mode de réalisation, l'étape d'obtenir les données d'état est mise en œuvre pendant une durée déterminée comptée à partir de la détection d'un message comprenant un identifiant du réseau.

Avantageusement selon ce mode, le premier terminal dispose, après avoir reçu les données de connexion au réseau, d'un temps limité pour construire ou recevoir les données d'état. Par exemple, il peut cesser de scruter le réseau au bout de cinq minutes. Si au bout de cette période, il n'a détecté aucun terminal actif, ou n'a reçu aucun ensemble de données d'état de la part du troisième terminal (point d'accès), il peut alors se connecter avec son adresse propre, ou recommencer une étape de surveillance, ou renoncer à la connexion, etc.

Corrélativement, l'invention vise un dispositif de connexion sécurisée tel qu'exposé dans la revendication 7.

Les caractéristiques et avantages du procédé de connexion sécurisée selon l'invention s'appliquent de la même façon au dispositif de de connexion sécurisée selon l'invention et vice versa.

L'invention vise également un système de communication d'un réseau local administré par un point d'accès pour la connexion sécurisée d'un premier terminal au réseau local, tel qu'exposé dans la revendication 8.

L'invention vise également un programme d'ordinateur sur un support d'enregistrement, ce programme étant susceptible d'être mis en œuvre dans un ordinateur ou un dispositif, conforme à l'invention, de connexion sécurisée, et un programme d'ordinateur sur un support d'enregistrement, ce programme étant susceptible d'être mis en œuvre dans un ordinateur ou un dispositif, conforme à l'invention, de fourniture de données d'état. Ces programmes comportent des instructions adaptées à la mise en œuvre des procédés correspondants.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions de l'un des programmes d'ordinateur mentionnés ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD-ROM ou une ROM de circuit microélectronique, ou encore un moyen d'enregistrement magnétique, par exemple une disquette (floppy disk) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel le programme est incorporé, le circuit étant adapté pour exécuter ou pour être utilisé dans l'exécution d'un procédé conforme à l'invention.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
[Fig. 1] la figure 1 illustre une architecture d'un réseau de communications dans lequel un système de connexion sécurisée proposé peut être mis en œuvre ;
[Fig. 3] la figure 2 est un logigramme représentant des étapes d'un procédé de connexion sécurisée proposé, mis en œuvre selon un mode de réalisation particulier ;

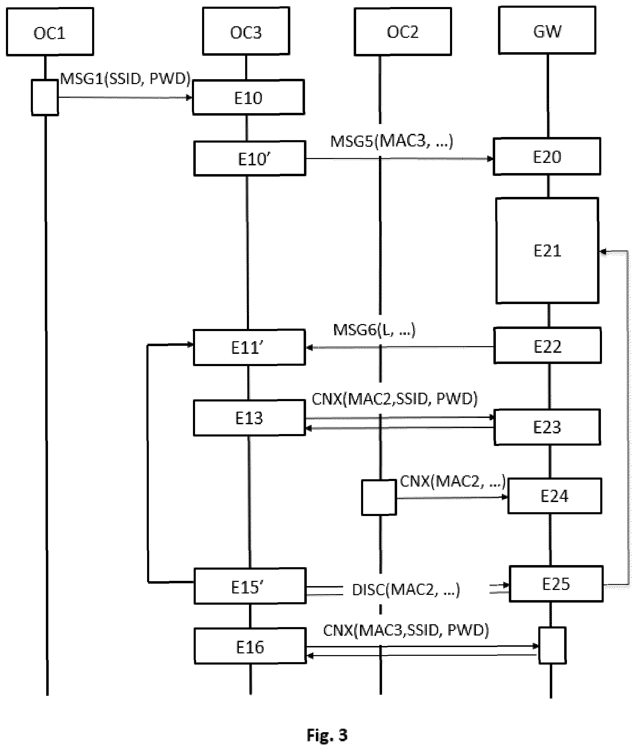

[Fig. 3] la figure 3 est un logigramme représentant des étapes d'un procédé de connexion sécurisée proposé, mis en œuvre selon un autre mode de réalisation particulier ;

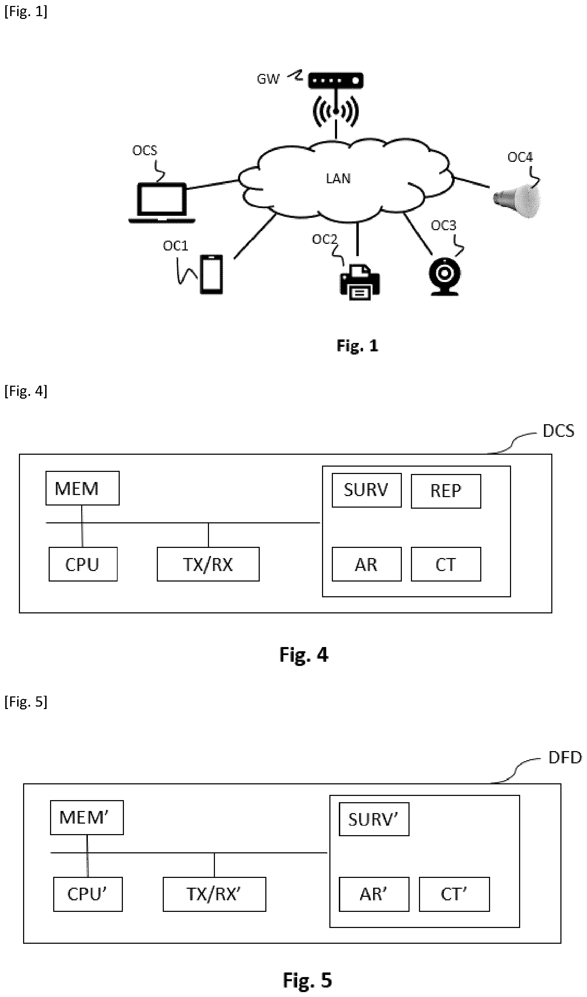

[Fig. 4] la figure 4 illustre une architecture fonctionnelle d'un dispositif de connexion sécurisée ;
[Fig. 5] la figure 5 illustre une architecture fonctionnelle d'un dispositif de fourniture de données d'état.

### Description des modes de réalisation

La **figure 1** illustre une architecture d'un réseau de communications dans lequel un système de connexion sécurisée proposé peut être mis en œuvre. Selon cet exemple particulier, le procédé et le dispositif de connexion sécurisée se trouvent sur le terminal OC3. Le procédé et le dispositif de fourniture de données d'état peuvent se trouver, selon un mode de réalisation, sur la passerelle GW.

Le réseau local (LAN) est par exemple un réseau local IP (Internet Protocol). Le réseau (LAN) comporte selon cet exemple un élément de gestion du réseau (GW) appelé dans la suite « point d'accès » ou « passerelle de service » ou plus simplement « passerelle », et des équipements terminaux (OCi) connectés sur ce réseau local aptes à établir des communications entre eux via la passerelle. La passerelle peut également être considérée au sens large comme un terminal du réseau local. Il s'agit par exemple d'une passerelle domestique connue sous la désignation commerciale de « Livebox ». Elle comporte une fonction de communication Wi-Fi, ou point d'accès (en anglais : Access Point), qui lui permet de communiquer avec les terminaux du réseau sans fil. Alternativement, l'équipement routeur pourrait être un routeur intelligent, un hub, etc. Selon un exemple de réalisation, la passerelle comporte en outre un module de communication permettant de recevoir des messages diffusés sur un canal radio de courte portée, comme le Bluetooth, Zigbee(IEEE 802.15.4), Z-Wave, DECT (« Digital Enhanced Cordless Telecommunications » en anglais) et/ou DECT ULE (pour « DECT Ultra Low Energy» en anglais), etc. On rappelle que le Bluetooth est une technologie de réseau de faible portée permettant de relier des appareils entre eux sans liaison filaire. Bluetooth permet de transmettre des données ou de la voix entre des terminaux équipés de modules radio, sur un rayon, ou portée, de l'ordre d'une dizaine de mètres à un peu moins d'une centaine de mètres. Le terme Wi-Fi recouvre pour sa part un ensemble de normes de la spécification IEEE 802.11 pour des communications sans fil pouvant aller jusqu'à quelques centaines de mètres.

Dans le cadre du Wi-Fi, pour se connecter à la passerelle, un terminal doit être appairé en utilisant un mécanisme d'appairage bien connu de l'homme du métier, qui comprend les étapes suivantes conformément à la spécification 802.11 :

Une étape de découverte (en anglais, probe) au cours de laquelle le terminal diffuse une trame de requête d'analyse (PROBE_REQUEST) et le point d'accès à portée répond avec une trame de réponse de sonde (PROBE_RESPONSE).

Une étape d'authentification au cours de laquelle le terminal diffuse une trame de demande d'authentification (AUTHENTICATION_REQUEST) et le point d'accès à portée répond avec une trame de réponse d'authentification (AUTHENTICATION _RESPONSE).

Une étape d'association au cours de laquelle le terminal diffuse une trame de demande d'association au point d'accès (ASSOCIATION_REQUEST) et le point d'accès à portée répond avec une trame de réponse d'association (ASSOCIATION _RESPONSE).

Si le protocole exige une authentification chiffrée du terminal, une étape d'échange de clés d'accès au réseau, tel qu'une clé WEP (pour « Wired Equivalent Privacy ») ou WPA (pour « WiFi Protected Access ») ou PSK (pour Pre-Shared Key) de la passerelle GW. Le mot de passe peut être saisi manuellement par un utilisateur sur les terminaux, ou fourni de manière automatique.

On rappelle que sur un réseau local de type Wi-Fi, les messages sont échangés en mode diffusé (en anglais, Broadcast). Ainsi un message transmis par un terminal sur le réseau est reçu par tous les autres terminaux. Un terminal peut lire dans un tel message un certain nombre d'informations de base, comme notamment les adresses physiques (notamment l'adresse MAC) des terminaux. En revanche, si la communication est sécurisée, un terminal ne peut déchiffrer les informations de haut niveau d'un tel message que s'il est enregistré (connecté, appairé) sur le réseau par la passerelle GW.

Outre la passerelle GW, le réseau LAN présenté comporte des terminaux OC1, OC2, OC3 et OC4. Dans l'exemple décrit ici, le terminal OC1 est un téléphone de type smartphone, le terminal OC2 est de type imprimante, le terminal OC3 est de type caméra et le terminal OC4 est de type ampoule connectée. Ils sont aptes à communiquer selon les normes Wi-Fi et/ou Bluetooth sur le réseau local via la passerelle GW.

Il comporte aussi selon l'exemple un dispositif OCS apte à se positionner en espion passif ou actif sur le réseau local. Un espionnage passif consiste à intercepter les échanges de messages entre les différents terminaux. Un espionnage actif consiste à émettre des trames légitimes et illégitimes (par exemple dans le but de déconnecter les équipements légitimes). Dans l'exemple décrit ici, le dispositif OCS est un ordinateur portable.

Chacun des terminaux OCi du réseau local comporte au moins un identifiant MACi permettant à la passerelle de l'identifier de manière univoque dans le réseau local. Il peut notamment s'agir de son adresse MAC (pour « Media Access Control » en anglais). L'adresse MAC native du terminal est un identifiant physique stocké dans une interface de l'équipement, par exemple sa carte réseau. A moins qu'elle n'ait été modifiée par l'utilisateur du terminal, elle est unique. Il s'agit de l'adresse MAC dite dans la suite « constructeur », ou « native ». Son format est normalisé. Dans le format le plus courant, une adresse MAC est constituée de 48 bits (6 octets) et est généralement représentée sous la forme hexadécimale en séparant les octets par un double point. Par exemple 5E:FF:56:A2:AF:15. Elle comprend notamment une donnée de type « O.U.I » (pour Organizationally Unique Identifier) qui est un nombre de 24 bits assigné par l'IEEE (Institute of Electrical and Electronics Engineers). Ce numéro identifie un fabricant ou une organisation de façon unique dans une adresse MAC. Ainsi il est possible, à partir de l'adresse MAC constructeur de la caméra, de reconnaître un terminal de type « Caméra » d'un fabricant spécialisé dans la production de caméras. L'adresse MAC d'un terminal peut être modifiée par l'utilisateur. Dans la suite, on appellera cette adresse modifiée une adresse MAC utilisateur.

Selon une variante, l'identifiant du terminal peut être une adresse IP, ou un UUID (pour «Universally Unique Identifier » en anglais), par exemple dans le cas d'un protocole Bluetooth, ou une IMSI (pour International Mobile Subscriber Identity), ou un IPUI (International Portable User Identity, identifiant unique de l'objet dans le cadre de la norme DECT-ULE), etc.

Dans l'exemple représenté, le terminal OC3 souhaite se connecter au réseau LAN. À cet effet, il se procure le nom (SSID) et le mot de passe du réseau. L'invention propose qu'il entre alors en communication sur le réseau, non pas avec son adresse MAC propre (qu'elle soit « constructeur » ou « native »), mais avec l'adresse MAC empruntée à un autre équipement du réseau, par exemple OC2, si cet équipement n'est pas en communication sur le réseau. Ce mécanisme présente un double avantage : l'attaquant OCS aura plus de difficultés à s'emparer de l'adresse MAC de OC3, puisque celle-ci est variable dans le temps (il peut emprunter successivement l'adresse MAC de OC2, puis celle de OC1, etc.) et de surcroît ne correspondant plus à l'adresse MAC supposée d'une caméra (puisque l'adresse est empruntée selon cet exemple à une imprimante).

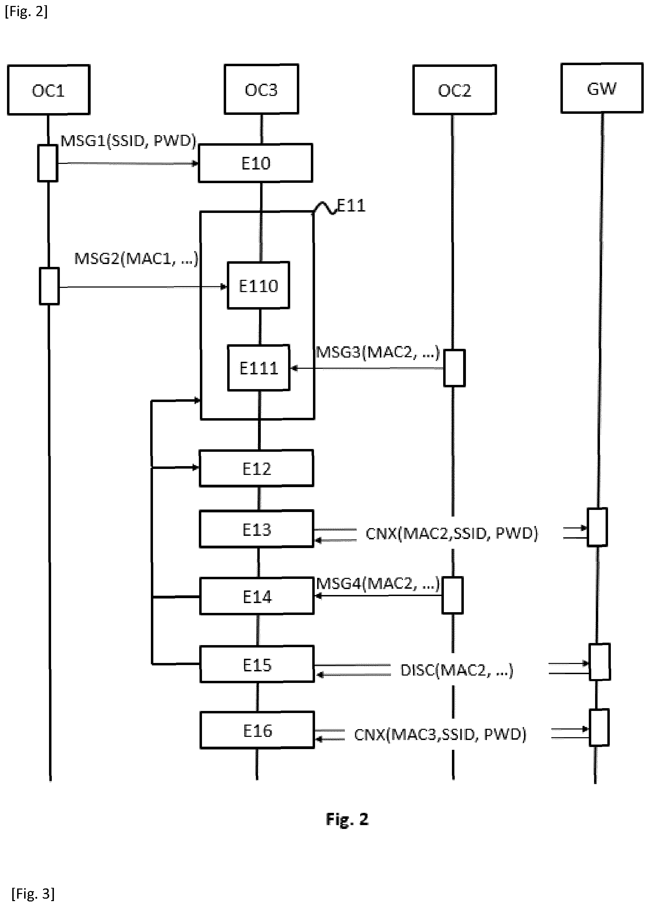

La **figure 2** est un logigramme représentant des étapes d'un procédé de connexion sécurisée, conforme à l'invention, mis en œuvre selon un mode de réalisation particulier par le système de connexion sécurisée décrit en référence à la figure 1. Selon ce mode de réalisation, le dispositif de connexion et le procédé de connexion sont sur le terminal OC3.

Au cours d'une étape **E10,** le terminal OC3 reçoit le nom du réseau Wi-Fi, ou SSID (ex. : Livebox-loT) et la clé Wi-Fi associée. Selon l'exemple décrit, il reçoit ces informations de la part du smartphone OC1. Selon un autre exemple, il peut réaliser un préappairage classique par échange de messages avec la passerelle GW pour récupérer le SSID.

Avant de se connecter au réseau Wi-Fi, l'équipement OC3 se positionne, au cours d'une étape **E11,** en mode de surveillance. Dans ce mode, il détecte tous les terminaux connectés au réseau Wi-Fi et pour chacun d'eux, mémorise une adresse, selon cet exemple l'adresse MAC (MAC), qu'elle soit de type constructeur ou utilisateur, afin de construire une table en mémoire, dite ensemble de données d'état, ou table d'états. À cet effet, il analyse tous les messages diffusés sur le réseau local. Selon l'exemple de la figure 2 :

Lors d'une sous-étape **E110,** le terminal OC3 intercepte un message en provenance du terminal OC1 (le smartphone). Il mémorise son adresse MAC, MAC1.

Lors d'une sous-étape **E111,** le terminal OC3 intercepte un message en provenance du terminal OC2 (l'imprimante). Il mémorise son adresse MAC, MAC2.

Optionnellement, le procédé mémorise aussi, sur réception d'un message, la date du paquet intercepté.

Optionnellement, le procédé en déduit le constructeur du terminal (on rappelle que les trois premiers octets d'une adresse MAC originale comprennent la référence du constructeur). Selon l'exemple, la première adresse MAC correspond à celle d'un constructeur de smartphones, noté COI ; la deuxième adresse MAC correspond à celle d'un constructeur d'imprimantes, noté COJ. Par exemple, le dispositif proposé peut mémoriser des identifiants des fabricants D-Link et Awox (marques déposées) qui commercialisent des objets connectés. Selon un autre exemple, s'il s'agit d'une liaison Bluetooth, un identifiant UUID peut aussi être déterminé à partir d'un champ d'un paquet de type « Bluetooth advertising » émis par le terminal. Le nom ou un préfixe du nom peut être déterminé à partir d'un identifiant Bluetooth de type « org.bluetooth.characteristic.gap.device_name » ou d'un numéro assigné selon la spécification Bluetooth, de type « 0x2a00 ».

Optionnellement, le procédé en déduit un type du terminal. Par exemple, pour un constructeur donné, il peut être connu que les adresses d'une première plage correspondent à des téléviseurs, et les adresses d'une seconde plage à des smartphones.

Optionnellement, le procédé en déduit une priorité : il peut par exemple affecter une priorité plus élevée aux adresses qui correspondent à un constructeur de capteurs de température, ou d'imprimantes, etc. Selon l'exemple, une priorité 3 (plus élevée) est affectée au constructeur d'imprimantes et une priorité 1 (plus faible) aux constructeurs de smartphones. Ceci signifie que le terminal OC3 préfèrera emprunter l'adresse d'une imprimante que celle d'un smartphone.

L'étape E11 s'achève selon un mode de réalisation après une durée déterminée à compter de la réception des identifiants de connexion. Selon un autre mode, l'étape E11 s'achève lorsqu'une adresse MAC d'une priorité donnée a été détectée. Selon encore un autre mode, l'étape E11 s'achève lorsque l'utilisateur le décide (il appuie par exemple sur un bouton qui déclenche l'appairage). À la fin de l'étape E11, le dispositif dispose d'une table en mémoire, dite table d'états, comportant les données d'état, comme présenté ci-dessous :

**[Table 1]**

| @MAC | OUI | PRIO | Date premier paquet | Date dernier paquet | Statut |
|---|---|---|---|---|---|
| MAC1 | SMART_COI | 1 | 7 avril 8 h 57 min | 7 avril 8 h 57 min | Connecté |
| MAC2 | IMPR_COJ | 3 | 7 avril 8 h 58 min | 7 avril 8 h 58 min | Connecté |

On notera qu'à l'issue de cette étape, dans ce mode de réalisation, tous les terminaux enregistrés sont forcément connectés puisqu'un message qui en est issu ou qui leur est destiné, comportant leur adresse MAC, a été reçu par OC3.

Si aucun équipement n'est détecté à la fin de l'étape E11, alors le terminal OC3 peut se connecter avec sa véritable adresse, ou selon une variante, renoncer à se connecter pendant une période prédéfinie, ou selon une autre variante, revenir au début de l'étape E11, ou encore émettre un message d'avertissement pour l'utilisateur, ou toute autre variante à la portée de l'homme du métier. L'étape E11 peut se poursuivre en tâche de fond pour mettre à jour la table d'états.

Au cours d'une étape **E12,** le terminal OC3 attend que l'un des terminaux détectés se déconnecte. Selon un mode de réalisation, un terminal est considéré comme déconnecté si le terminal OC3 ne détecte plus de paquets le concernant (portant son adresse) pendant un temps prédéterminé (par exemple, 20 secondes). Selon un mode de réalisation, un terminal est considéré comme déconnecté si un paquet intercepté correspond à un message de déconnexion. À la fin de l'étape E12, selon l'exemple représenté, OC3 a détecté une déconnexion de l'équipement OC2 (l'imprimante ne communique plus depuis la veille, 7 avril). Le procédé modifie la table d'états en mémoire. On suppose aussi que l'étape E11 a continué à s'exécuter en tâche de fond, que l'ampoule OC4 s'est connectée, et qu'elle dispose d'une priorité plus élevée (5). Le dispositif dispose de la table suivante :

**[Table 2]**

| @MAC | OUI | PRIO | Date premier paquet | Date dernier paquet | Statut |
|---|---|---|---|---|---|
| MAC1 | SMART_COI | 1 | 7 avril 8 h 57 min | 8 avril 2 h 2 min | Connecté |
| MAC2 | IMPR_COJ | 3 | 7 avril 8 h 58 min | 7 avril 8 h 58 min | Déconnecté |
| MAC4 | AMP_COK | 5 | 8 avril 6 h 58 min | 8 avril 6 h 59 min | Connecté |

Selon un mode de réalisation, l'étape E12 est limitée dans le temps (par exemple à 3 minutes). Si aucun terminal ne se déconnecte dans cet intervalle de temps, alors le terminal OC3 peut se connecter avec sa véritable adresse, ou selon une variante, renoncer à se connecter pendant une période prédéfinie, ou selon une autre variante, revenir au début de l'étape E11, ou encore émettre un message d'avertissement pour l'utilisateur.

Selon un autre mode de réalisation, qui sera détaillé à l'appui de la figure 3, les étapes E11 et E12 sont remplacées par une étape dans laquelle l'ensemble des données d'état est fourni partiellement (par exemple, une liste d'adresses MAC est fournie) ou en totalité (par exemple, une liste d'adresses MAC est fournie en association avec un constructeur et une priorité) par un terminal tiers du réseau. Selon un mode de réalisation, il s'agit de la passerelle (GW).

Selon une variante, seule l'étape E11 consistant à récupérer la liste des équipements du réseau est remplacée par une étape selon laquelle cette liste est fournie par un terminal tiers du réseau.

Au cours de l'étape **E13,** le terminal OC3 se connecte au réseau Wi-Fi en utilisant l'adresse MAC du terminal qui s'est déconnecté, selon l'exemple l'adresse MAC2 de l'imprimante OC2. On notera que le terminal OC3, qui est selon cet exemple une caméra, utilise dans ce cas l'adresse MAC d'une imprimante. Si l'adresse MAC est celle du constructeur de l'imprimante (adresse native), OC3 utilise l'adresse MAC d'un fabricant d'imprimantes. Ainsi une observation de son adresse MAC par un terminal pirate comme OCS ne permettra pas de détecter qu'il s'agit d'une caméra, et de ce fait empêchera toute attaque ciblée sur un dispositif de type caméra (désactivation, modification des paramètres de la caméra, capture d'images, etc.).

Par la suite le terminal OC3 est connecté au réseau local avec l'adresse empruntée et communique sur ce dernier avec la passerelle et les autres terminaux. Il peut déchiffrer les messages une fois que la passerelle l'a authentifié.

Lorsque le terminal OC2, qui est le possesseur légitime de l'adresse MAC2, tente de se reconnecter, il émet un message de demande d'authentification et/ou de connexion à l'attention de la passerelle GW, par exemple un message de type PROBE REQUEST, ou AUTHENTICATION/ASSOCIATION REQUEST, comme décrit auparavant. La passerelle répond par l'émission d'un message de réponse (par exemple PROBE RESPONSE ou AUTHENTICATION/ASSOCIATION RESPONSE) à destination du terminal qui tente de se reconnecter, en utilisant notamment son adresse MAC, MAC2. Le terminal OC3 reçoit (intercepte) l'un de ces messages, noté MSG4, lors d'une étape **E14,** l'analyse et constate que l'adresse MAC2 est celle qu'il a empruntée à OC2.

L'équipement OC3 se déconnecte au cours d'une étape **E15** pour ne pas perturber le terminal « légitime ». Il peut transmettre à cet effet une trame de dé-authentification, ou de dissociation selon la norme précitée 802.11.

Selon un mode de réalisation, le terminal OC3 se déconnecte de lui-même au bout d'un certain temps, par exemple 5 minutes. Dans ce cas l'étape 14 peut être omise.

Puis le procédé de connexion sur OC3 cherche à déterminer dans sa table s'il y a une nouvelle adresse MAC qu'il peut utiliser (c'est-à-dire l'adresse MAC d'un équipement qui n'est pas connecté actuellement). À cet effet, il peut revenir à l'étape E12 pour analyser la table d'états dont il dispose en mémoire. Alternativement il peut aussi relancer l'étape E11 pour détecter de nouveaux appareils sur le réseau local et attendre la déconnexion de l'un d'entre eux au cours de l'étape E12. Il est à noter que les étapes ne sont pas nécessairement séquentielles, et que de ce fait l'étape E11 de recherche et de construction de la table d'états peut se poursuivre durant les étapes E12-E15, par exemple en tâche de fond.

On notera que l'invention ne se limite pas au Wi-Fi mais peut aussi concerner d'autres protocoles radio comme le Bluetooth Low Energy ou le ZigBee. Le principe reste le même, les trames sont différentes.

La **figure 3** est un logigramme représentant des étapes d'un procédé de connexion sécurisée, conforme à l'invention, mis en œuvre selon un autre mode de réalisation particulier par le système de connexion sécurisée décrit en référence à la figure 1, sur le terminal OC3, en association avec un procédé et un dispositif de fournitures d'adresses sur la passerelle domestique GW.

Selon ce mode de réalisation, c'est la passerelle GW qui prend en charge la gestion de la table d'états, et la diffuse vers les terminaux du réseau. En effet, il est bien connu qu'une passerelle domestique conserve en permanence une table des terminaux qui lui sont connectés ; ainsi, la passerelle peut simplement consulter en mémoire la table des terminaux qui lui sont connectés, remise à jour à chaque réception d'un paquet de connexion/déconnexion d'un terminal, et facilement préparer une table d'états correspondant aux tables d'états représentées en support de la figure 2. Elle peut aussi transmettre simplement une liste d'adresses des terminaux inactifs du réseau. Selon ce mode de réalisation :

L'étape **E10** est similaire à l'étape E10 de la figure 2.

Lors d'une étape **E10',** le terminal OC3 transmet à la passerelle GW un message de demande de connexion sécurisée. Ce message noté MSG5 peut correspondre à un message existant du protocole utilisé, par exemple selon la norme Wi-Fi 802.11 un message « PROBE REQUEST », ou à un nouveau message, par exemple « PROBE CLIENTS ».

La requête est reçue par la passerelle lors d'une étape **E20.**

Lors d'une étape **E21,** la passerelle prépare une liste L de terminaux pour le terminal OC3. Selon un mode de réalisation, elle prépare une liste de terminaux générique pour tous les terminaux du réseau, comportant la totalité ou un sous-ensemble des terminaux du réseau, de préférence inactifs (c'est-à-dire qui sont déconnectés, ou ne sont plus en communication depuis une période de temps donnée). Selon un autre mode de réalisation, elle prépare une liste de tous les terminaux, connectés ou déconnectés. La passerelle connaît nécessairement tous les terminaux connectés et déconnectés du réseau Wi-Fi et pour chacun d'eux, a déjà mémorisé une adresse, selon cet exemple l'adresse MAC (MAC1, MAC2, MAC3), qu'elle soit de type constructeur ou utilisateur. Elle prépare un message MSG6 contenant cette liste L des adresses des terminaux, et optionnellement leur constructeur, leur type, leur priorité, etc. Selon un autre mode de réalisation, la liste des terminaux est spécifique pour un terminal. Si la passerelle détecte que OC3 est une caméra, elle peut par exemple omettre de transmettre la liste des caméras, mais lui transmettre les adresses des terminaux qui en sont différents (par exemple les imprimantes et ampoules connectées du réseau) et permettront de « cacher » au mieux OC3 lorsqu'il empruntera leur adresse.

Au cours d'une étape **E11',** le terminal OC3 reçoit, en provenance de la passerelle GW, dans un message noté MSG6, la liste L. Il mémorise la liste et/ou construit, à partir de ses informations, une table en mémoire, dite ensemble de données d'état, ou table d'états, similaire par exemple à la table 2 présentée à l'appui de la figure 2.

Le message MSG6 peut correspondre à un message existant du protocole utilisé par exemple selon la norme Wi-Fi 802.11 un message « PROBE RESPONSE » dont les champs ont été adaptés à la transmission de la liste des terminaux du réseau, ou à un nouveau message (PROBE CLIENTS RESPONSE).

Les différentes options qui ont été présentées à l'appui de la figure 2 restent valables : le terminal OC3 peut recevoir de la passerelle, ou déduire des adresses reçues, un constructeur d'un terminal, son type, sa priorité, etc.

Selon un mode de réalisation, les étapes suivantes E12-E16 peuvent être identiques à celles présentées à l'appui de la figure 2, en particulier si la passerelle transmet la liste de tous les terminaux, qu'ils soient connecté ou déconnectés.

Selon un autre mode de réalisation, comme représenté à la figure 3, l'étape E12 est omise, car la passerelle n'a transmis que la liste des terminaux qui sont inactifs, il est donc inutile d'attendre une déconnexion de l'un d'entre eux ; l'étape E11' est suivie directement de l'étape **E13,** après que le procédé de connexion sur OC3 a choisi une adresse (par exemple la première dans la liste, ou celle de priorité la plus élevée) dans la liste reçue. L'étape E14 est remplacée par une étape **E24** sur la passerelle, qui reçoit et traite la connexion du terminal OC2 dont l'adresse MAC2 a été empruntée ; la passerelle déconnecte au cours d'une étape **E25** le terminal OC3, qui reçoit l'information de déconnexion lors d'une étape **E15'.** L'étape E16 est inchangée.

Selon un autre mode de réalisation, la passerelle est remplacée par un autre terminal, par exemple le terminal OC1 qui a transmis le SSID et la clé Wi-Fi lors de l'étape E10.

La **figure 4** représente une architecture fonctionnelle d'un dispositif de connexion sécurisée DCS.

Selon le mode de réalisation proposé aux figures 2 et 3, il est installé sur le terminal (OC3) qui souhaite bénéficier d'une connexion sécurisée. Il comprend des modules pour réaliser une connexion sécurisée au réseau local par emprunt d'une adresse MAC à l'un des terminaux inactifs du réseau local.

Dans les modes de réalisation décrits ici, le dispositif DCS a l'architecture matérielle d'un ordinateur. Son architecture matérielle comprend notamment un processeur CPU, une mémoire vive et une mémoire morte regroupées dans un module MEM, optionnellement une mémoire flash non volatile dans un mode particulier de réalisation de l'invention, ainsi que des moyens de communication TX/RX pour émettre et recevoir des messages selon le type de réseau visé par le mode de réalisation (Wi-Fi, Bluetooth, etc.). De tels moyens sont connus en soi et ne sont pas décrits plus en détail ici.

La mémoire vive du dispositif permet d'enregistrer des variables utilisées pour l'exécution des étapes du procédé de connexion selon l'invention, telles que les adresses MAC, les mots de passe, les identifiants, la table des états, etc.

La mémoire morte du dispositif constitue un support d'enregistrement conforme à l'invention, lisible par le processeur et sur lequel est enregistré ici un programme d'ordinateur PROG conforme à l'invention. Le programme d'ordinateur PROG définit des modules fonctionnels et logiciels configurés pour assurer une connexion sécurisée. Ces modules fonctionnels s'appuient sur et/ou commandent les éléments matériels du dispositif.

Le dispositif de connexion comprend par ailleurs dans des modes de réalisation :
- un module d'analyse SURV configuré pour analyser les messages reçus par le dispositif et en extraire l'adresse (MAC) des terminaux du réseau ;
- un module REP pour remplacer l'adresse MAC du dispositif courant, ou adresse propre, par celle qui est empruntée à un autre dispositif du réseau ;
- un module CT pour construire ou mémoriser et mettre à jour la table des états comportant la liste des adresses MAC et l'état (connecté ou déconnecté) ainsi qu'optionnellement le type, la priorité, etc. associés aux terminaux du réseau ;
- un module AR d'analyse du réveil du terminal dont il a emprunté l'adresse, afin de réaliser une déconnexion pour libérer l'adresse MAC empruntée.

La **figure 5** représente une architecture fonctionnelle d'un dispositif de fourniture d'un ensemble de données d'état DFD.

Selon le mode de réalisation proposé à la figure 3, il est installé sur la passerelle GW qui administre le réseau local (LAN). Il comprend des modules pour fournir à un terminal du réseau local un ensemble de données d'état contenant des adresses MAC de terminaux du réseau qui peuvent être empruntées pour une connexion temporaire.

Dans les modes de réalisation décrits ici, le dispositif DFD a l'architecture matérielle d'un ordinateur. Son architecture matérielle comprend notamment un processeur CPU', une mémoire vive et une mémoire morte regroupées dans un module MEM', optionnellement une mémoire flash non volatile dans un mode particulier de réalisation de l'invention, ainsi que des moyens de communication TX/RX' pour émettre et recevoir des messages selon le type de réseau visé par le mode de réalisation (Wi-Fi, Bluetooth, etc.). De tels moyens sont connus en soi et ne sont pas décrits plus en détail ici.

La mémoire vive du dispositif permet d'enregistrer des variables utilisées pour l'exécution des étapes du procédé de fourniture de données d'état selon l'invention, telles que les adresses MAC, les mots de passe, les identifiants, une liste (L) de terminaux, etc.

La mémoire morte du dispositif constitue un support d'enregistrement conforme à l'invention, lisible par le processeur et sur lequel est enregistré ici un programme d'ordinateur PROG' conforme à l'invention.

Le programme d'ordinateur PROG' définit des modules fonctionnels et logiciels ici configurés pour construire et diffuser une liste (L) de terminaux et leurs adresses associées. Ces modules fonctionnels s'appuient sur et/ou commandent les éléments matériels du dispositif.

Le dispositif DFD comprend par ailleurs dans des modes de réalisation :
- un module d'analyse SURV' configuré pour analyser les messages reçus par le dispositif et en extraire l'adresse (MAC) des terminaux du réseau dialoguant avec le dispositif (ici, avec la passerelle). On notera que ce module existe déjà sur tous Is ponts d'accès.
- un module CT' pour construire ou mémoriser et mettre à jour la liste (L) des terminaux à diffuser sur le réseau, comportant leurs adresses (MAC) ainsi qu'optionnellement le type, la priorité, etc. associés.
- un module AR' d'analyse du réveil d'un terminal dont l'adresse a été empruntée, afin de réaliser une déconnexion du terminal emprunteur pour libérer l'adresse MAC empruntée.

## Revendications

1. Procédé de connexion sécurisée mis en œuvre par un premier terminal (OC3) d'un réseau (LAN) administré par un point d'accès (GW), le premier terminal comportant une première adresse (MAC3), dite adresse propre, le procédé comprenant des étapes de :
- obtenir (E11, E11', E12) un ensemble de données, dit données d'état, comportant au moins une adresse (MAC1, MAC2) d'un second terminal au moins (OC1, OC2) connu du réseau,
- en déduire, pour ledit au moins un second terminal, un type du terminal ;
- se connecter (E13) au réseau en utilisant une adresse d'un dit second terminal (MAC2) dont le type ne correspond pas au type réel du premier terminal .

2. Procédé selon la revendication 1 **caractérisé en ce que** l'étape d'obtenir les données d'état comporte les sous-étapes de :
- recevoir (E110, E111) un message (MSG2, MSG3) en provenance dudit ou vers ledit au moins un second terminal (OC1, OC2) du réseau comportant ladite adresse ;
- mémoriser (E110, E111) ladite adresse (MAC2, MAC3) dudit au moins un second terminal dans les données d'état.
et le procédé comporte en outre une étape de détecter (E12) une inactivité dudit au moins un second terminal (OC2) avant de se connecter (E13).

3. Procédé selon la revendication précédente, dans lequel les données d'état comportent en outre une date de réception du message en provenance dudit ou vers ledit au moins un second terminal, et l'inactivité dudit au moins un second terminal (OC2) est détectée en fonction de ladite date de réception.

4. Procédé selon la revendication 1 **caractérisé en ce que** l'étape d'obtenir les données d'état comporte une étape de : recevoir (E11') un message (MSG6, L) comprenant des données d'état en provenance d'un troisième terminal (GW, OC1) du réseau.

5. Procédé selon l'une des revendications précédentes, dans lequel les données d'état comportent en outre une priorité associée à ladite adresse dudit au moins un second terminal.

6. Procédé selon l'une des revendications précédentes, dans lequel l'étape d'obtenir les données d'état (E11, E11') est mise en œuvre pendant une durée déterminée comptée à partir de la détection d'un message (MSG1) comprenant un identifiant (SSID) du réseau.

7. Dispositif de connexion sécurisée (DCS) d'un premier terminal (OC3) d'un réseau (LAN) administré par un point d'accès (GW), le terminal comportant une première adresse (MAC3), dite adresse propre, le dispositif étant configuré (CPU, MEM) pour mettre en œuvre :
- obtenir (E11, E11', E12) un ensemble de données, dit données d'état, comportant au moins une adresse (MAC1, MAC2) d'un second terminal au moins (OC1, OC2) connu du réseau ,
- en déduire, pour ledit au moins un second terminal, un type du terminal ;
- se connecter (E13) au réseau en utilisant une adresse d'un dit second terminal (MAC2) dont le type ne correspond pas au type réel du premier terminal.

8. Système d'un réseau local (LAN) administré par un point d'accès (GW) pour la connexion sécurisée d'un premier terminal (OC3) au réseau local, le système comprenant :
- sur le premier terminal, un dispositif de connexion sécurisée selon la revendication 7 ;
- sur le point d'accès, un dispositif de fourniture d'un ensemble de données d'état configuré (CPU', MEM') pour mettre en œuvre :
- préparer (E21) un ensemble de données, dites données d'état, comportant au moins une adresse (MAC1, MAC2) d'un terminal au moins (OC1, OC2) connu du point d'accès et non connecté ;
- transmettre (E12) ledit ensemble de données sur le réseau (OC2) .

9. Programme d'ordinateur (PROG) comportant des instructions pour l'exécution des étapes d'un procédé de connexion sécurisée selon l'une des revendications 1 à 6 lorsque ledit programme est exécuté par un ordinateur.

## Patentansprüche

1. Verfahren zum sicheren Verbinden, umgesetzt durch ein erstes Endgerät (OC3) eines Netzwerks (LAN), das durch einen Zugangspunkt (GW) verwaltet wird, wobei das erste Endgerät eine erste Adresse (MAC3), als eigene Adresse bezeichnet, umfasst, wobei das Verfahren folgende Schritte beinhaltet:
- Erhalten (E11, E11', E12) eines Satzes Daten, als Zustandsdaten bezeichnet, welcher mindestens eine Adresse (MAC1, MAC2) mindestens eines zweiten Endgeräts (OC1, OC2), das dem Netzwerk bekannt ist, umfasst,
- daraus Ableiten, für das mindestens eine zweite Endgerät, eines Typs des Endgeräts;
- Verbinden (E13) mit dem Netzwerk unter Verwendung einer Adresse eines solchen zweiten Endgeräts (MAC2), dessen Typ nicht dem realen Typ des ersten Endgeräts entspricht.

2. Verfahren nach Anspruch 1, **dadurch gekennzeichnet, dass** der Schritt des Erhaltens der Zustandsdaten die folgenden Unterschritte umfasst:
- Empfangen (E110, E111) einer Nachricht (MSG2, MSG3) von dem oder an das mindestens eine zweite Endgerät (OC1, OC2) des Netzwerks, die die Adresse umfasst;
- Speichern (E110, E111) der Adresse (MAC2, MAC3) des mindestens einen zweiten Endgeräts in den Zustandsdaten, und dass das Verfahren vor dem Verbinden (E13) ferner einen Schritt des Detektierens (E12) einer Inaktivität des mindestens einen zweiten Endgeräts (OC2) umfasst.

3. Verfahren nach dem vorhergehenden Anspruch, wobei die Zustandsdaten ferner ein Datum des Empfangs der Nachricht von dem oder an das mindestens eine zweite Endgerät umfassen und die Inaktivität des mindestens einen zweiten Endgeräts (OC2) in Abhängigkeit von dem Empfangsdatum detektiert wird.

4. Verfahren nach Anspruch 1, **dadurch gekennzeichnet, dass** der Schritt des Erhaltens der Zustandsdaten einen folgenden Schritt umfasst: Empfangen (E11') einer Nachricht (MSG6, L), die Zustandsdaten beinhaltet, von einem dritten Endgerät (GW, OC1) des Netzwerks.

5. Verfahren nach einem der vorhergehenden Ansprüche, wobei die Zustandsdaten ferner eine Priorität umfassen, die mit der Adresse des mindestens einen zweiten Endgeräts assoziiert ist.

6. Verfahren nach einem der vorhergehenden Ansprüche, wobei der Schritt des Erhaltens der Zustandsdaten (E11, E11') für eine bestimmte Dauer umgesetzt wird, die ab der Detektion einer Nachricht (MSG1) gemessen wird, die eine Kennung (SSID) des Netzwerks beinhaltet.

7. Vorrichtung zum sicheren Verbinden (DCS) eines ersten Endgeräts (OC3) eines Netzwerks (LAN), das durch einen Zugangspunkt (GW) verwaltet wird, wobei das Endgerät eine erste Adresse (MAC3), als eigene Adresse bezeichnet, umfasst, wobei die Vorrichtung dazu konfiguriert ist (CPU, MEM), Folgendes umzusetzen:
- Erhalten (E11, E11', E12) eines Satzes Daten, als Zustandsdaten bezeichnet, welcher mindestens eine Adresse (MAC1, MAC2) mindestens eines zweiten Endgeräts (OC1, OC2), das dem Netzwerk bekannt ist, umfasst,
- daraus Ableiten, für das mindestens eine zweite Endgerät, eines Typs des Endgeräts;
- Verbinden (E13) mit dem Netzwerk unter Verwendung einer Adresse eines solchen zweiten Endgeräts (MAC2), dessen Typ nicht dem realen Typ des ersten Endgeräts entspricht.

8. System eines lokalen Netzwerks (LAN), das durch einen Zugangspunkt (GW) verwaltet wird, zum sicheren Verbinden eines ersten Endgeräts (OC3) mit dem lokalen Netzwerk, wobei das System Folgendes beinhaltet:
- in dem ersten Endgerät, eine Vorrichtung zum sicheren Verbinden nach Anspruch 7;
- in dem Zugangspunkt, eine Vorrichtung zur Bereitstellung eines Satzes Zustandsdaten, die dazu konfiguriert ist (CPU', MEM'), Folgendes umzusetzen:
- Vorbereiten (E21) eines Satzes Daten, als Zustandsdaten bezeichnet, welcher mindestens eine Adresse (MAC1, MAC2) mindestens eines Endgeräts (OC1, OC2) umfasst, das dem Zugangspunkt bekannt ist und nicht verbunden ist;
- Übertragen (E12) des Satzes Daten an das Netzwerk (OC2).

9. Computerprogramm (PROG), das Anweisungen umfasst, die bei Ausführung des Programms durch einen Computer die Schritte eines Verfahrens zum sicheren Verbinden nach einem der Ansprüche 1 bis 6 ausführen.

## Claims

1. Secure connection method implemented by a first terminal (OC3) of a network (LAN) administered by an access point (GW), the first terminal comprising a first address (MAC3), called own address, the method comprising steps of:
- acquiring (E11, E11', E12) a set of data, called status data, comprising at least one address (MAC1, MAC2) of at least one second terminal (OC1, OC2) known to the network;
- deducing therefrom, for said at least one second terminal, a type of the terminal;
- connecting (E13) to the network using an address (MAC2) of a said second terminal the type of which does not correspond to the actual type of the first terminal.

2. Method according to Claim 1, **characterized in that** the step of acquiring the status data comprises the substeps of:
- receiving (E110, E111) a message (MSG2, MSG3) originating from or to said at least one second terminal (OC1, OC2) of the network comprising said address;
- storing (E110, E111) said address (MAC2, MAC3) of said at least one second terminal in the status data,
and the method further comprises a step (E12) of detecting inactivity of said at least one second terminal (OC2) before connecting (E13).

3. Method according to the preceding claim, wherein the status data further comprises a reception date of the message originating from or to said at least one second terminal, and the inactivity of said at least one second terminal (OC2) is detected as a function of said reception date.

4. Method according to Claim 1, **characterized in that** the step of acquiring the status data comprises a step of: receiving (E11') a message (MSG6, L) comprising status data originating from a third terminal (GW, OC1) of the network.

5. Method according to one of the preceding claims, wherein the status data further comprises a priority associated with said address of said at least one second terminal.

6. Method according to one of the preceding claims, wherein the step (E11, E11') of acquiring the status data is implemented for a determined duration starting from the detection of a message (MSG1) comprising an identifier (SSID) of the network.

7. Device (DCS) for securely connecting a first terminal (OC3) of a network (LAN) administered by an access point (GW), the terminal comprising a first address (MAC3), called own address, the device being configured (CPU, MEM) to implement:
- acquiring (E11, E11', E12) a set of data, called status data, comprising at least one address (MAC1, MAC2) of at least one second terminal (OC1, OC2) known to the network;
- deducing therefrom, for said at least one second terminal, a type of the terminal;
- connecting (E13) to the network using an address (MAC2) of a said second terminal the type of which does not correspond to the actual type of the first terminal.

8. System of a local area network (LAN) administered by an access point (GW) for securely connecting a first terminal (OC3) to the local area network, the system comprising:
- on the first terminal, a secure connection device according to Claim 7;
- on the access point, a device for providing a set of status data configured (CPU', MEM') to implement:
- preparing (E21) a set of data, called status data, comprising at least one address (MAC1, MAC2) of at least one terminal (OC1, OC2) known to the access point and not connected;
- transmitting (E12) said set of data over the network (OC2).

9. Computer program (PROG) comprising instructions for executing the steps of a secure connection method according to one of Claims 1 to 6 when said program is executed by a computer.
